# EUROPEAN PATENT APPLICATION

(11) **EP 2 735 966 A2**
(43) Date of publication of application: **28.05.2014**
(21) Application number: 13191068.9
(22) Date of filing: 31.10.2013
(51) Int. Cl.: G06F 9/445, G06F 9/44

(54) **Electronic apparatus, method of updating firmware, and computer-readable recording medium**

(30) Priority: 23.11.2012 KR 20120133904
(71) Applicant: Samsung Electronics Co., Ltd, Gyeonggi-do 443-742 (KR)
(72) Inventor: Park, Sun-a, Incheon (KR); Choi, Yun-ho, Gyeonggi-do (KR)
(74) Representative: Taor, Simon Edward William

(57) **Abstract**

An electronic apparatus includes a function unit which stores firmware, a communication interface unit which receives new firmware to be updated, a controller which converts an operation mode of the electronic apparatus to a power-saving mode, and an update unit which updates firmware of the function unit using the new firmware received in a process of restoring an operation mode of the electronic apparatus from a power-saving mode to a general mode.

## Description

The present general inventive concept relates to an electronic apparatus, a method of updating firmware, and a computer-readable recording medium, and more particularly, to an electronic apparatus which not only complements security weakness but also improves user convenience, a method of updating firmware, and a computer-readable recording medium.

In general, an electronic apparatus such as a computer employs firmware to control hardware, and the firmware is stored and used in a Flash ROM or an EEPROM. Such firmware is constantly updated to enhance the performance of the electronic apparatus.

Conventionally, firmware is updated in a DOS through an apparatus capable of performing a booting operation including an image to be updated, and then the updating operation is completed by restarting a system. This process must be repeated each time the firmware is required to be updated.

However, the above method does not provide enough security for a new firmware image file and is vulnerable to security problems while a user proceeds with the updating operation. Specifically, most of DOS images and firmware files necessary for updating the firmware are transferred to a user through Internet downloading, and such a process is exposed to image viruses, and there is also a risk of damaging the files in the process of downloading, copying or transferring the files.

In addition, the updating operation is performed on DOS by preparing a separate booting apparatus rather than in an OS environment that a user has used, causing inconvenience to the user. Further, the user needs to make preparatory operations such as downloading a new firmware version suitable for the user's device and storing it in a storing medium in advance.

Exemplary embodiments of the present general inventive concept provide an electronic apparatus which not only decreases security weakness but also improves user convenience, a method of updating firmware and a computer-readable recording medium containing the method.

Additional features and utilities of the present general inventive concept will be set forth in part in the description which follows and, in part, will be obvious from the description, or may be learned by practice of the general inventive concept.

Exemplary embodiments of the present inventive concept provide an electronic apparatus which includes a function unit which stores firmware, a communication interface unit which receives new firmware to be updated, a controller which converts an operation mode of the electronic apparatus to a power-saving mode, and an update unit which updates firmware of the function unit using the new firmware received in a process of restoring an operation mode of the electronic apparatus from a power-saving mode to a general mode.

The power-saving mode may be a S₃ power-saving mode.

The electronic apparatus may further include a first storage unit which stores the received new firmware, and the update unit may update firmware of the function unit using new firmware stored in the first storage unit.

The electronic apparatus may further include a second storage unit which stores the received new firmware, and the controller, when an event to update the firmware occurs, may copy new firmware stored in the second storage unit in the first storage unit.

The first storage unit may be a volatile memory, and the second storage unit may be a non-volatile memory.

The controller may store the new firmware in a Non-Volatile Sleeping Memory (NVS) area of the volatile memory.

The controller, when an operation mode of the electronic apparatus is restored to a general mode, may set a flag informing that a firmware updating operation needs to be performed.

The controller may read out apparatus information of the function unit and determine whether there is new firmware based on the apparatus information.

The electronic apparatus may further include a user interface unit, when it is determined that there is new firmware, notifies that firmware is updatable.

The user interface unit may display apparatus information of the function unit as well, and the apparatus information may include at least one of an apparatus name, a serial number, and revision information.

The controller may verify the new firmware by comparing the apparatus information with revision information of the new firmware.

The controller, when an event to update the firmware occurs, may convert an operation mode of the electronic apparatus to a power-saving mode.

The function unit may be a Hard Disk Drive (HDD).

Exemplary embodiments of the present inventive concept also provide method of updating firmware in an electronic apparatus including: a function unit which stores firmware according to an exemplary embodiment includes receiving new firmware to be updated, converting an operation mode of the electronic apparatus to a power-saving mode, and updating firmware of the function unit using the new firmware received in a process of restoring an operation mode of the electronic apparatus from a power-saving mode to a general mode.

The power-saving mode may be a S₃ power-saving mode.

The method may further include storing the received new firmware in a volatile memory, and the updating may include updating firmware of the function unit using new firmware stored in the volatile memory.

The method may further include storing the received new firmware in a non-volatile memory, and the storing in the volatile memory may include, when an event to update the firmware occurs, copying new firmware stored in the non-volatile memory in the volatile memory.

The storing in the volatile memory may include storing the new firmware in a Non-Volatile Sleeping Memory (NVS) area of the volatile memory.

The method may further include, when an operation mode of the electronic apparatus is restored to a general mode, setting a flag informing that a firmware updating operation needs to be performed.

The method may further include reading out apparatus information of the function unit and determining whether there is new firmware based on the apparatus information.

The method may further include, when it is determined that there is new firmware, notifying that firmware is updatable.

The notifying may include displaying apparatus information of the function unit as well, and the apparatus information may include at least one of an apparatus name, a serial number, and revision information.

The method may further include verifying the new firmware by comparing the apparatus information with revision information of the new firmware.

The converting may include, when an event to update the firmware occurs, converting an operation mode of the electronic apparatus to a power-saving mode.

The function unit may be a Hard Disk Drive (HDD).

Exemplary embodiments of the present inventive concept also provide computer-readable recording medium including a program to execute a method of updating firmware in an electronic apparatus including a function unit which stores firmware, wherein the firmware updating method includes receiving new firmware to be updated, converting an operation mode of the electronic apparatus to a power-saving mode, and updating firmware of the function unit using the new firmware received in a process of restoring an operation mode of the electronic apparatus from a power-saving mode to a general mode.

Exemplary embodiments of the present inventive concept also provide an electronic apparatus, including: a function unit which stores firmware; a communication interface unit to identify and receive new firmware from an external source; a controller which converts an operation mode of the electronic apparatus between a power-saving mode and a general operating mode and to update the stored firmware with the new firmware received when the electronic apparatus transitions from the power-saving mode to the general mode.

In an exemplary embodiment, the electronic apparatus further includes a storage unit to store the received new firmware before updating the firmware stored in the function unit.

In an exemplary embodiment, the electronic apparatus further includes a second storage unit which stores the received new firmware, wherein the controller copies new firmware stored in the second storage unit into the first storage unit when an event to update the firmware occurs.

In an exemplary embodiment, the controller sets a flag informing that a firmware updating operation needs to be performed when an operation mode of the electronic apparatus is restored to a general mode from the power-saving mode the first storage unit is a volatile memory and the second storage unit is a non-volatile memory.

Exemplary embodiments of the present inventive concept also provide an electronic apparatus which contains firmware to control hardware, the electronic apparatus including: a communication interface unit to identify and receive new firmware from an external source; a volatile memory to store the received new firmware; a controller which converts an operation mode of the electronic apparatus between a power-saving mode and a general operating mode; and an update unit which updates firmware with the new firmware received when the electronic apparatus transitions from the power-saving mode to the general mode.

These and/or other features and utilities of the present general inventive concept will become apparent and more readily appreciated from the following description of the embodiments, taken in conjunction with the accompanying drawings of which:
FIG. 1 is a block diagram illustrating detailed configuration of an electronic apparatus according to an exemplary embodiment;
FIG. 2 is a block diagram illustrating detailed configuration of a controller in FIG. 1;
FIG. 3 is a view illustrating an example of a user interface window which can be displayed on a user interface unit in FIG. 1;
FIG. 4 is a flowchart provided to briefly explain a method for updating firmware according to an exemplary embodiment;
FIG. 5 is a flowchart provided to explain operations before entering into a power-saving mode in detail;
FIG. 6 is a flowchart provided to explain conversion of operation modes in detail; and
FIG. 7 is a flowchart provided to explain operations in a rebooting process.

Reference will now be made in detail to the embodiments of the present general inventive concept, examples of which are illustrated in the accompanying drawings, wherein like reference numerals refer to the like elements throughout. The embodiments are described below in order to explain the present general inventive concept by referring to the figures.

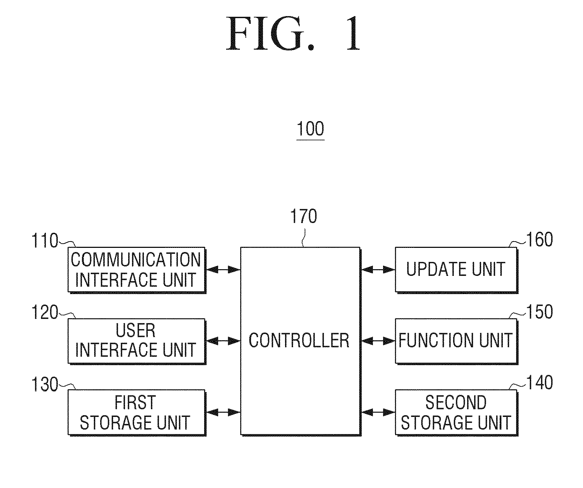

FIG. 1 is a block diagram illustrating a detailed configuration of an electronic apparatus according to an exemplary embodiment.

In FIG. 1, an electronic apparatus 100 according to an exemplary embodiment comprises a communication interface unit 110, a user interface unit 120, a first storage unit 130, a second storage unit 140, a function unit 150, an update unit 160, and a controller 170. Herein, the electronic apparatus 100 may be a PC, a notebook PC, a tablet, a PMP, or a smart phone, etc., which is booted using an operation system.

The communication interface unit 110 is formed to connect the electronic apparatus 100 to an external apparatus (not shown), and may be connected to the external apparatus not only through a Local Area Network (LAN) and an Internet network, but also through a wireless communication method (such as, GSM, UMTS, LTE, WiBRO, etc.).

The communication interface unit 110 may receive a new firmware from an external apparatus. Herein, the firmware may be a micro-program which controls firmware. In this exemplary embodiment, new firmware is received from an external apparatus (not shown) or through an Internet network, but new firmware may be received through an apparatus such as a USB memory stick.

The user interface unit 120 comprises a plurality of function keys through which a user may set or select various functions supported by the electronic apparatus 100, and may display various information provided by the electronic apparatus 100. The user interface unit 120 may be realized as an apparatus such as a touch screen, which is capable of performing input and output simultaneously, or an apparatus which combines a mouse and a monitor.

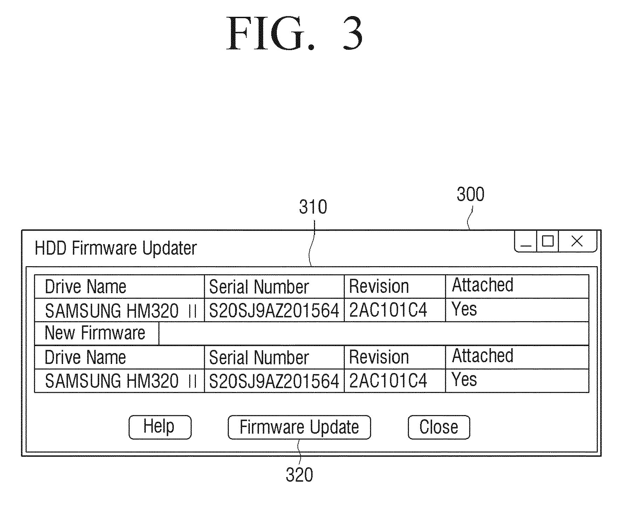

The user interface unit 120 displays information that there is firmware which can be installed. Specifically, if there is installable firmware available, the user interface unit 120 may inform a user that there is firmware which can be installed. In this case, the user interface unit 120 may also display information regarding the installable firmware. Further, the user interface unit 120 may also display information regarding an apparatus subject to firmware, such as the name of the apparatus, the serial number of the apparatus, revision information, and so on. A user interface window which can be displayed by the user interface unit 120 will be explained later with reference to FIG. 3.

The user interface unit 120 may display a user interface window to receive a firmware installation command (or a firmware upgrade command). Accordingly, a user may input a firmware installation command through the displayed user interface window. Meanwhile, in the above description, a firmware installation command is input through the user interface unit 120, but a firmware installation command may alternatively be input from an external apparatus depending on exemplary embodiments being referred to. Such an installation command corresponds to an event for updating firmware.

In addition, the user interface unit 120 may display information regarding firmware installation (or firmware upgrade). Specifically, the user interface unit 120 may display information regarding firmware installation such as the time required to install new firmware (or to upgrade firmware), the specific operation for installing new firmware, etc., through the user interface window.

The first storage unit 130 is a volatile memory for the operations of an operating system. Herein, the volatile memory is a memory which requires continuous power supply to maintain information, and is used as an operation space to improve the speed of programs and processes while an operation system is being executed. The volatile memory may be a Dynamic Random Access Memory (DRAM), Static Random Access Memory (SRAM), or any other type of volatile memory that provides the intended purposes as described herein.

In addition, the first storage unit 130 has an NVS area. Herein, the NVS area is a reserved area in a system memory by a BIOS (basic input/output system), and information in the NVS area is not lost even when the system enters into S3 power-saving mode. Accordingly, new firmware may be maintained until the BIOS maintains the system in the S3 state and proceeds with updating firmware. Herein, the S3 power-saving mode is a mode where a program which is being executed by a user is stored in a volatile memory, and power supply to each component of the electronic apparatus 100 is cut off except for power supply to the volatile memory.

The first storage unit 130 copies and stores new firmware stored in the second storage unit 140 in the process of updating firmware under the control of the controller 170 which will be explained later.

The second storage unit 140 stores programs necessary to drive the electronic apparatus 100. Specifically, the second storage unit 140 is a non-volatile memory which stores programs which are a group of various commands necessary to drive the electronic apparatus 100. Herein, the programs include Master Boot Record (MBR or GPT) and an operating system. Specifically, the operating system is an operating program to drive the electronic apparatus 100, and the MBR (or GPT) is information to identify where and how an operating system is located and to load it onto a main memory unit of a computer in the process of booting the electronic apparatus 100.

In addition, the second storage unit 140 stores new firmware. Specifically, the second storage unit 140 may store new firmware received through the communication interface unit 110. The second storage unit 140 may be realized as a storage medium within the electronic apparatus (for example, a flash memory, a hard disk (HDD), etc.), an external storage medium (for example, a removable disk including a USB memory, a storage medium connected to a host, a web server via network, and so on.

Further, the second storage unit 140 may store data stored in the first storage unit 130. Specifically, if the mode of the electronic apparatus 100 is changed to a S₄ power-saving mode, the second storage unit 140 may store data stored in the first storage unit 130 in a predetermined area. Meanwhile, the non-volatile memory may be a HDD or a Solid State Drive (SSD), etc. within the electronic apparatus 100. Herein, the S₄ power-saving mode is a mode where a program which is being executed by a user is stored in a volatile memory, and then power supply to each component of the electronic apparatus 100 is cut off.

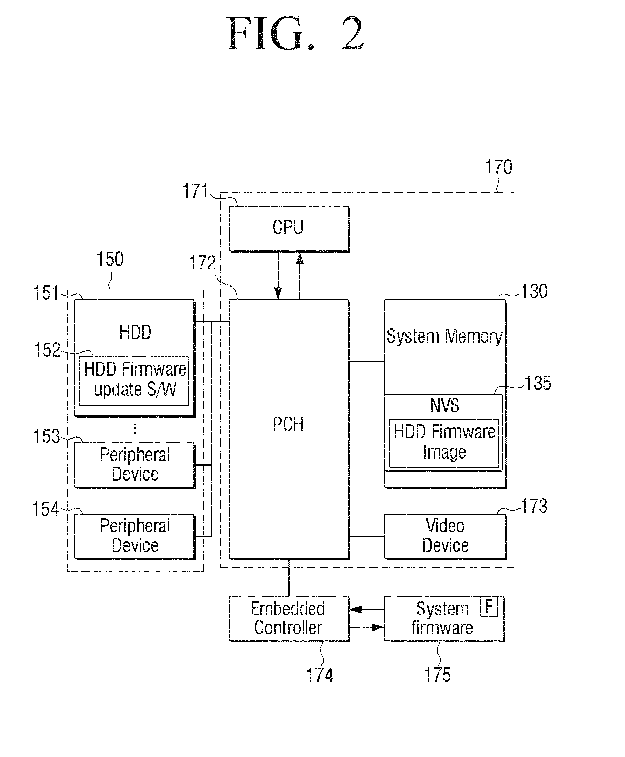

The function unit 150 performs a predetermined function. Specifically, the function unit 150 stores firmware and performs a predetermined operation using the stored firmware. For example, if the function unit 150 is an HDD, the HDD comprises a non-volatile memory 152 which stores firmware for HDD operations as illustrated in FIG. 2. Herein, the predetermined function may be storing data, processing data, outputting an image, and so on. Meanwhile, in the present exemplary embodiment, the HDD is described as an example of the function unit 150, but the function unit 150 is not limited thereto. That is, the function unit 150 may be an SSD or any other components having firmware in the electronic apparatus 100. In addition, in the present exemplary embodiment, one function unit is provided in the electronic apparatus, but the electronic apparatus 100 may have a plurality of function units 151, 153, 154 as illustrated in FIG. 2.

The update unit 160 determines whether a flag is set. Specifically, if the electronic apparatus 100 is booted, the update unit 160 determines whether there is a flag informing that the operation of updating firmware is required in NVRAM of a BIOS, and if it is determined that the flag exists, the operation of updating firmware may be performed, and if it is determined that the flag does not exist, a general booting operation or a restoring operation may be performed.

The update unit 160 updates firmware of the function unit 150. Specifically, the update unit 160 may update firmware of the function unit 150 using new firmware stored in the first storage unit 130 in the process of restoring the operation mode of the electronic apparatus 100 from a power-saving mode to a general mode. The update unit 160 may be a BIOS.

The controller 170 controls each component of the electronic apparatus 100. Specifically, the controller 170 may determine an operation mode of the electronic apparatus 100 by determining whether there is user manipulation and how much time has passed after user manipulation was input.

In addition, the controller 170 may control each component of the electronic apparatus 100 so that the electronic apparatus 100 may have an operation state corresponding to a determined operation mode. Specifically, the electronic apparatus 100 has a normal mode, a plurality of power-saving modes, and an off mode. Herein, the normal mode is an operation mode where power is supplied to each component of the electronic apparatus 100 in order to execute a process requested by a user, the power-saving mode is an operation mode where power supply to a specific component is cut off or minimized in order to minimize power consumption of the electronic apparatus 100, and the off mode is an operation mode where the electronic apparatus 100 is not operated.

Subsequently, the controller 170 determines whether there is new firmware. Specifically, the controller 170 may read out apparatus information of the function unit 150, and determine whether there is new firmware regarding the corresponding apparatus on a local directory or network based on the apparatus information. More specifically, the controller 170 checks vendor information and model information regarding a mounted apparatus (a function unit) through model number information, determines an apparatus to be updated based on the model information, and searches related firmware on a local directory or network. In this case, the apparatus information is information such as device identification information, and examples of device identification information required by a system is as below.

**[Table 1]**

| Word | Information |
|---|---|
| 10-19 | Serial Number(20 ASCII character) |
| 20-22 | Retired |
| 23-26 | |
| 27-46 | Model Number(40 ASCII character) |

In addition, the controller 170 verifies new firmware. Specifically, the controller 170 verifies new firmware by comparing firmware revision information of the function unit 150 with revision information of the searched new firmware.

If it is determined that the new firmware is appropriate based on the result of the comparison, the controller 170 may control the user interface unit 120 to display a message informing a user of the necessity of updating. In this case, the controller 170 may also display information regarding a function unit to be updated and information regarding the new firmware.

If a command to install firmware is input from a user, the controller 170 determines that a predetermined event occurs. Meanwhile, in the present exemplary embodiment, firmware is installed after receiving a confirmation command from a user, but if there is new firmware available, updating may be performed without confirmation from a user.

Once a predetermined event occurs, the controller 170 stores new firmware, which is stored in the second storage unit 140, in the NVS area of the first storage unit 130. When the operation mode of the electronic apparatus 100 is restored to a general mode, the controller 170 stores a flag informing that the operation of updating firmware should be performed in a non-volatile memory area of a BIOS. Subsequently, the controller 10 converts the operation mode of the electronic apparatus 100 from a normal mode to a power-saving mode.

As described above, the electronic apparatus 100 according to an exemplary embodiment may update new firmware simply by executing software regularly, thereby improving user convenience. In addition, the electronic apparatus 100 may improve security issues which may occur in the process of updating firmware. Specifically, the risk of damaging files or being infected with a virus due to a user action may be reduced, and the risk of damaging data in the process of initializing an apparatus before and after updating may also be reduced.

Meanwhile, in the exemplary embodiment, the update unit 160 and the controller 170 are illustrated and explained as separate components from each other, but the function of the update unit 160 and the function of the controller 170 may be performed in one component, which will be explained later with reference to FIG. 2.

In addition, in the above described exemplary embodiment, the operation of updating firmware is performed in the process of the restoring operation of S3 power-saving mode using the S3 power-saving mode, but if there is enough storage space to store firmware in the BIOS of the electronic apparatus 100 or there is another non-volatile memory to store firmware temporarily in the electronic apparatus 100, the above-described updating operation may be performed not only in the S3 power-saving mode but also in the restoring process of S4 power-saving mode. In addition, the above-described updating operation may be performed in the process of a booting operation in a power-off mode, that is, before a peripheral apparatus is initialized.

FIG. 2 is a block diagram illustrating a detailed configuration of a controller in FIG. 1.

Referring to FIG. 2, the controller 170 may consist of a CPU 171, a platform controller hub 172, a video device 173, an embedded controller 174, and system firmware 175.

The CPU 171 is a central processing device which decrypts a program command and performs an operation accordingly.

The platform controller hub 172 (hereinafter, referred to as PCH) controls communication between each component of the electronic apparatus 100.

The video apparatus 173 controls the user interface unit 120.

The embedded controller 174 controls a booting process of the electronic apparatus 100. Specifically, the embedded controller 174 controls a booting process of the electronic apparatus 100 using firmware information stored in the system firmware 175. Herein, the embedded controller 174 may perform the same operations as the above-described update unit 160.

FIG. 3 is a view illustrating an example of a user interface window which can be displayed on a user interface unit in FIG. 1.

Referring to FIG. 3, a user interface window 300 comprises a first area 310 and a second area 320. Specifically, the user interface window 300 may be displayed when new firmware exists on a local directory or network.

The first area 310 is an area to display firmware information, and displays apparatus information of a function unit which stores firmware and information regarding new firmware. Herein, the apparatus information may include information such as an apparatus name, a serial number, and revision information.

The second area 320 is an area to receive an update command, and if the second area is selected by a user, a series of operations are performed as described above.

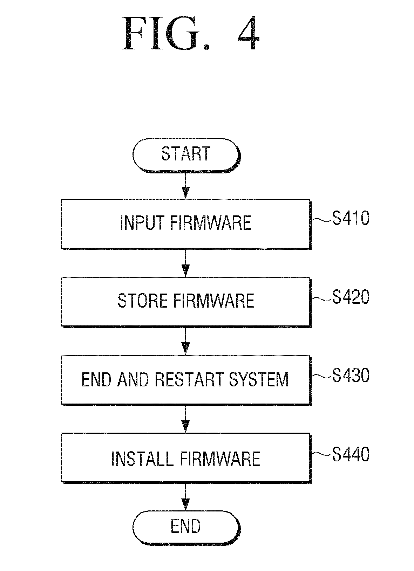

FIG. 4 is a flowchart provided to briefly explain a method of updating firmware according to an exemplary embodiment.

Referring to FIG. 4, first, new firmware to be updated is received (operation S410).

Subsequently, the received firmware is stored (operation S420). Specifically, the received new firmware is stored in a non-volatile memory (for example, an HDD), and if an event to update firmware occurs, the new firmware stored in the non-volatile memory may be copied and stored in an NVS area of a volatile memory (for example, a DRAM).

If an event to update firmware occurs, the operation mode of the electronic apparatus is converted to S3 power-saving mode (operation S430). In this case, in order to perform the operation of updating firmware in a restoring process, a flag informing that the operation of updating firmware should be performed may be stored in a non-volatile memory of a BIOS when the operation mode of the electronic apparatus 100 is restored to a general mode.

Subsequently, the firmware of a function unit is updated using the new firmware stored in the process of restoring the operation mode of the electronic apparatus from a power-saving mode to a general mode (operation S440).

As described above, another firmware updating method according to an exemplary embodiment may update new firmware simply by executing software regularly, thereby improving user convenience. In addition, security issues which may occur in the process of updating firmware may be resolved. The firmware updating method in FIG. 4 may be performed not only in an electronic apparatus having the configuration of FIG. 1, but also in other electronic apparatuses having other configurations.

In addition, the above-described controlling method may be realized as at least one execution program to execute the above-described controlling method, and such an execution program may be stored in a non-transient computer-readable recording medium.

Accordingly, each block of the present inventive concept as illustrated may be executed as a computer-recordable code on a non-transient computer-readable recording medium. The computer-readable recording medium may be a device capable of storing data which is readable by a computer system.

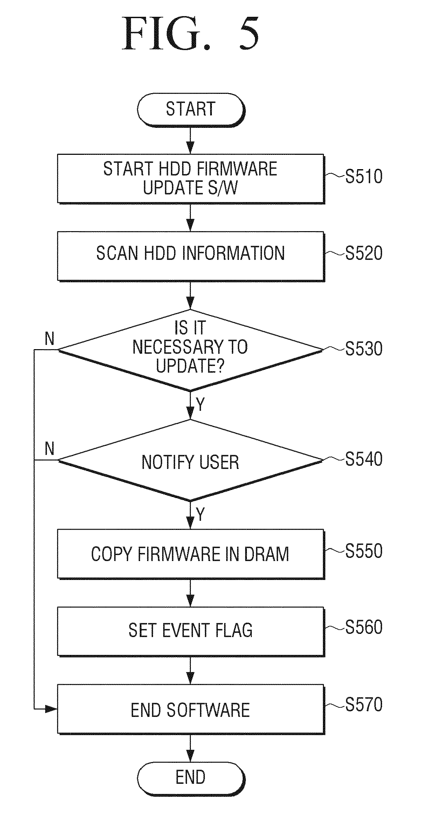

FIG. 5 is a flowchart provided to explain the operation of updating firmware before entering into a power-saving mode in detail. Hereinafter, it is presumed that the function unit is an HDD.

Referring to FIG. 5, first of all, after a system is booted, a user executes hard firmware update software (operation S510).

The executed software scans information regarding an HDD apparatus which is mounted in the system (operation S520). Specifically, in order to update apparatus firmware, the system needs to collect information on the level of device identifying information which is referred to when sensing the HDD. An example of the device identifying information that is required by the software at the very least is illustrated in table 1.

Subsequently, it is determined whether there is a new firmware update which is appropriate for the apparatus by searching firmware on a local directory or network based on the information obtained in the previous stage (operation S530).

If it is determined that new firmware does not exist (operation S530-N), the software is terminated (operation S570).

If it is determined that new firmware exists (operation S530-Y), a user is informed that an update is required (operation S540). In this case, information regarding firmware of the current apparatus is provided together with information regarding firmware to be updated, and then whether to performing the updating operation may be selected.

If the user wishes to terminate the software without performing the updating (operation S540-N), the software is terminated at this stage (operation S570).

However, if the user wishes to perform the updating (operation S540-Y), new firmware is copied and stored in a memory of the system (that is, DRAM) (operation S550). Specifically, the new firmware may be stored in Non-Volatile-Sleeping Memory (NVS) area of the system memory (DRAM). Herein, the NVS area is an area reserved by a BIOS of the system memory, and information in the NVS area is not lost even when the operation mode of an electronic apparatus enters into the S3 (power saving mode) state. Accordingly, new firmware data may be maintained until a BIOS performs the updating process by maintaining the operation state of the electronic apparatus as the S3 state.

In addition, a flag for allowing the system firmware to recognize a firmware update mode is set (operation S560). Specifically, a firmware update event flag is stored in NVRAM of BOIS ROM area.

Meanwhile, the firmware updating operation as illustrated in FIG. 5 may be realized as at least one software to execute the above-described firmware updating operation, and such an execution program may be stored in a computer-readable recording medium.

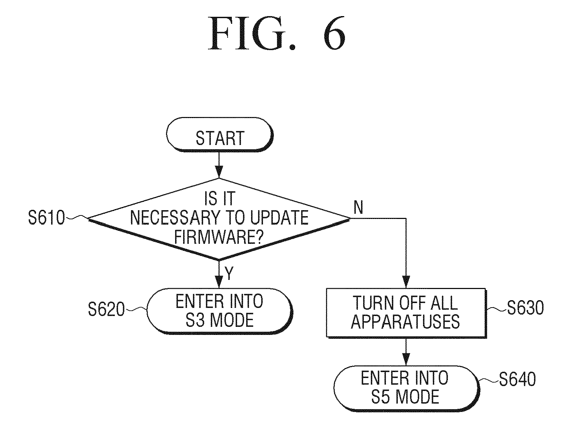

FIG. 6 is a flowchart provided to explain conversion of operation modes in detail.

Referring to FIG. 6, if a command to terminate the system is input, it is determined whether the command is to update firmware (operation S610). Specifically, whether the command is to update firmware or not may be determined based on whether a firmware update event flag is set in NVRAM of a BIOS.

If it is determined that the termination of the system is not to update firmware (operation S610-N), the system termination for generally turning off the system (S5) is performed (S630, S640).

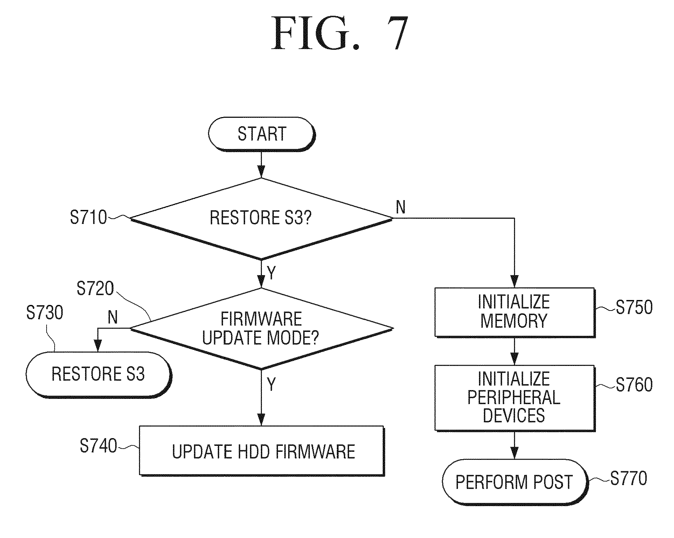

Meanwhile, if it is determined that the termination of the system is to update firmware (operation S610-Y), the operation mode of the system is converted to the S3 power-saving mode in order not to damage the firmware image which is stored in the system memory for firmware updating (operation S620). Once the operation mode is converted to the S3 power-saving mode, a booting operation is performed about 1 second later using a Real Time Clock (RTC) or EC. The operations after the booting operation will be explained with reference to FIG. 7.

FIG. 7 is a flowchart provided to explain operations in a rebooting process.

Referring to FIG. 7, first of all, if a power-on command is input, it is determined whether the current booting is caused by the restoration by entering into the S3 power-saving mode or it is caused by a system booting (operation S710). Specifically, such a determination may be performed based on a flag set in a BIOS. As such a determination operation is well-known in the related art, a detailed description thereof will not be provided.

If it is determined that the restoration is not caused by entering into the S3 power-saving mode (operation S710-N), the memory is initialized according to a general booting process (operation S750), the peripheral device is initialized (operation S760), and POST is performed in order to perform the booting process (operation S770).

If it is determined that the restoration is caused by entering into the S3 power-saving mode (operation S710-Y), it is determined whether it is a firmware update mode (operation S720). Specifically, whether it is a firmware update mode or not may be determined based on whether a firmware update event flag is set in NVRAM of a BIOS.

If it is determined that it is not a firmware update mode (operation S720-N), a general S3 restoration operation is performed (operation S730). Since the general S3 restoration operation is well-known in the related art, description thereof will not be provided.

Meanwhile, if it is determined that it is a firmware update mode (operation S720-Y), firmware updating is performed (operation S740). Specifically, the firmware of the function unit may be updated based on new firmware stored in the NVS of a volatile memory.

Once the firmware updating is completed, the system may be restarted for normal system booting.

Meanwhile, the firmware updating operation illustrated in FIG. 7 may be realized as at least one program to execute the above-described firmware updating operation, and such a program may be stored in a BIOS.

Although a few embodiments of the present general inventive concept have been shown and described, it will be appreciated by those skilled in the art that changes may be made in these embodiments without departing from the principles of the general inventive concept, the scope of which is defined in the appended claims and their equivalents.

## Claims

1. An electronic apparatus, comprising:
a function unit arranged to store firmware;
a communication interface unit arranged to receive new firmware to be updated;
a controller arranged to convert an operation mode of the electronic apparatus to a power-saving mode; and
an update unit arranged to update firmware of the function unit using the new firmware received in a process of restoring an operation mode of the electronic apparatus from a power-saving mode to a general mode.

2. The electronic apparatus of claim 1, wherein the power-saving mode is a S3 power-saving mode.

3. The electronic apparatus of claim 1 or 2, further comprising:
a first storage unit arranged to store the received new firmware,
wherein the update unit is arranged to update firmware of the function unit using new firmware stored in the first storage unit.

4. The electronic apparatus of claim 3, further comprising:
a second storage unit arranged to store the received new firmware,
wherein the controller, when an event to update the firmware occurs, is arranged to copy new firmware stored in the second storage unit in the first storage unit.

5. The electronic apparatus of claim 4, wherein the first storage unit is a volatile memory,
wherein the second storage unit is a non-volatile memory.

6. The electronic apparatus of claim 5, wherein the controller is arranged to store the new firmware in a Non-Volatile Sleeping Memory (NVS) area of the volatile memory.

7. The electronic apparatus of any one of claims 1 to 6, wherein the controller, when an operation mode of the electronic apparatus is restored to a general mode, is arranged to set a flag informing that a firmware updating operation needs to be performed.

8. The electronic apparatus of any one of claims 1 to 7, wherein the controller is arranged to read out apparatus information of the function unit and to determine whether there is new firmware based on the apparatus information.

9. The electronic apparatus of claim 8, further comprising:
a user interface unit arranged to, when it is determined that there is new firmware, notify that firmware is updatable.

10. The electronic apparatus of claim 8 or 9, wherein the user interface unit is arranged to display apparatus information of the function unit as well,
wherein the apparatus information includes at least one of an apparatus name, a serial number, and revision information.

11. The electronic apparatus of any one of claims 8 to 10, wherein the controller is arranged to verify the new firmware by comparing the apparatus information with revision information of the new firmware.

12. The electronic apparatus of any one of claims 1 to 11, wherein the controller, when an event to update the firmware occurs, is arranged to convert an operation mode of the electronic apparatus to a power-saving mode.

13. A method for updating firmware in an electronic apparatus including a function unit which stores firmware, the method comprising:
receiving new firmware to be updated;
converting an operation mode of the electronic apparatus to a power-saving mode; and
updating firmware of the function unit using the new firmware received in a process of restoring an operation mode of the electronic apparatus from a power-saving mode to a general mode.

14. The method of claim 13, wherein the power-saving mode is a S3 power-saving mode.

15. The method of claim 13 or 14, further comprising:
storing the received new firmware in a volatile memory,
wherein the updating comprises updating firmware of the function unit using new firmware stored in the volatile memory.
